# EUROPÄISCHE PATENTSCHRIFT

(11) **EP 1 306 003 B1**
(45) Veröffentlichungstag und Bekanntmachung des Hinweises auf die Patenterteilung: **21.06.2006**
(21) Anmeldenummer: 02022492.9
(22) Anmeldetag: 05.10.2002
(51) Int. Cl.: A01F 15/10, A01D 90/04

(54) **Ballenpresse für landwirtschaftliches Erntegut**
Baler for agricultural crops
Presse-botteleuse pour des produits agricoles

(30) Priorität: 23.10.2001 DE 10151572
(43) Veröffentlichungstag der Anmeldung: 02.05.2003
(73) Patentinhaber: CLAAS Selbstfahrende Erntemaschinen GmbH, 33428 Harsewinkel (DE)
(72) Erfinder: Clostermeyer, Gerhard, 33334 Gütersloh (DE)

(56) Entgegenhaltungen:
- EP-A- 1 133 914
- DE-A- 10 021 748
- DE-A- 19 750 954
- DE-A- 19 806 630

## Beschreibung

Die Erfindung betrifft eine Ballenpresse mit einem Erntegutaufnehmer gemäß dem Oberbegriff des Anspruchs 1.

Aus der DE 198 06 630 ist eine gattungsgemäße, als Ballenpresse ausgeführte landwirtschaftliche Erntemaschine bekannt geworden, der in ihrem frontseitigen Bereich zur Erntegutaufnahme eine Pickup-Trommel zugeordnet ist. Das von der Pickup-Trommel aufgenommene Erntegut wird in deren rückwärtigen Bereich an eine sogenannte Einzugswalze übergeben, die an ihrem Umfang Mitnahmeelemente aufweist, die das Erntegut erfassen und unterschlächtig in den rückwärtigen Bereich der Einzugswalze fördern. Je nach Ausführung der Mitnehmer kann dabei zugleich eine Querförderung des Erntegutes zur Reduzierung der Breite des Erntegutstranges möglich sein. Das von der Einzugswalze geförderte Erntegut wird in ihrem rückwärtigen Bereich an einen oberschlächtig fördernden Schneid- und/oder Förderrotor übergeben, der das Erntegut durch einen gutzerkleinernden Schneidmechanismus fördert und abgabeseitig an einen Raffermechanismus übergibt, der das Erntegut schließlich an die Presskammer der Ballenpresse übergibt. Damit die Übergabe des Erntegutes von der Einzugswalze an den Schneid- und Förderrotor störungsarm erfolgt ist diesem Übergabebereich obenseitig eine Niederhaltetrommel zugeordnet, die den aus der Einzugstrommel austretenden Erntegutstrang so umlenkt, dass er von den Mitnahmeelementen des Schneid- und Förderrotors sicher erfasst werden kann. Da die Niederhaltetrommel nicht in den Umfangskreis der Einzugswalze eingreift, hängt das Heraustreten des Erntegutstranges maßgeblich vom Abgabeverhalten der Einzugstrommel selbst ab und ist um so schlechter, je steiler die in Drehrichtung vorn liegenden Kanten der Mitnehmer der Einzugswalze ausgeführt sind. Dies kann dazu führen, dass ein Teil des von den Mitnehmern geförderten Erntegutstranges wieder in den frontseitigen Annahmebereich der Einzugswalze gefördert wird. Dabei kann es zu erheblichen Gutförderproblemen beim Aufeinandertreffen des rückgeführten Erntegutes und des von der Pickup-Trommel aufgenommenen Erntegutes führen. Zudem nimmt die Durchsatzleistung des Erntegutaufnehmers ab, da die Aufnahme von Erntegut um den zurückgeförderten Erntegutanteil reduziert wird. Außerdem kann es durch diese Rückführung zum Wickeln von Erntegut um die Einzugswalze kommen

Aus der DE 197 50 954 A ist eine weitere gattungsgemäße Ballenpresse bekannt, deren Erntegutförderorgan Abstreifer zugeordnet sind, um die obengenannten Nachteile auszuräumen.

Der Erfindung liegt die Aufgabe zugrunde, eine Ballenpresse für landwirtschaftliches Halmgut mit einem Erntegutaufnehmer so weiterzubilden, dass auf konstruktiv einfache Weise ein verbesserter störungsfreier Guttransport, eine konstruktive einfache Anpassung an unterschiedliche Erntegutdurchsätze sowie eine hohe Durchsatzleistung ermöglicht wird.

Erfindungsgemäß wird die Aufgabe mit den kennzeichnenden Merkmalen des Anspruchs 1 gelöst.

Indem dem Erntegutförderorgan ein oder mehrere Abstreifer zugeordnet sind, wobei der oder die Abstreifer zumindest eine Gutleitkante aufweisen, die wenigstens teilweise in den Umfangskreis des Erntegutförderorgans eingreift und sich in den dem Erntegutförderorgan nachgeordneten Bereich erstreckt, wird sichergestellt, dass das von dem Erntegutförderorgan transportierte Erntegut in dessen rückwärtigen Bereich sicher abgegeben und nachgeordneten Arbeitsorganen zugeführt wird.

Damit das von dem Erntegutförderer an die nachgeordnete Schneid- und Fördereinrichtung einerseits gutstauvermeidend abgegeben und andererseits gutstauvermeidend angenommen wird, ist es von Vorteil, wenn die zumindest eine Gutleitkante eine an die Rotationsbewegung des Erntegutförderers und/oder der Schneid- und Fördereinrichtung angepasste Kurvenform aufweist.

Damit das von den Abstreifern aus dem Erntegutförderorgane herausbewegte Erntegut sicher von der nachgeordneten Schneid- und Fördereinrichtung erfasst werden kann, ist es von Vorteil, wenn der oder die Abstreifer die Schneid- und Fördereinrichtung zumindest teilweise und mit Abstand umgreifen, sodass die Gutleitkanten der Abstreifer zugleich die Funktion von Gegenhaltern übernehmen.

Da das Erntegutförderorgan in der Regel zur Auflösung von Gutverstopfungen auch im Reversierbetrieb arbeiten kann, sind in einer weiteren vorteilhaften Ausführung dem oder den Abstreifern frontseitig zumindest eine weitere Gutleitkante zugeordnet, die bei Reversierbetrieb des Erntegutförderorgans dafür sorgt, dass das Erntegutförderorgan bei Reversierbetrieb kein Erntegut oberschlächtig in die landwirtschaftliche Erntemaschine fördern kann.

Um die Lage des oder der Abstreifer zu dem Erntegutförderorgan an verschiedene Erntegutarten und -eigenschaften besser anpassen zu können, ist in einer weiteren vorteilhaften Ausgestaltung der Erfindung vorgesehen, dass der oder die Abstreifer in ihrer Lage zum Erntegutförderer veränderbar sind.

Um den sich im Bereich des Erntegutförderorgans ausbildenden Durchgangsspalt für das Erntegut besser an die zu fördernde Menge des Erntegutes anpassen zu können, ist die Lage des Erntegutförderers und der mit ihm in Wirkverbindung stehenden Abstreifer in vertikaler Richtung veränderbar.

Um eine sichere Abförderleistung der Abstreifer zu gewährleisten, durchsetzen die Abstreifer in einer weiteren vorteilhaften Ausgestaltung der Erfindung den Bereich zwischen in Achsrichtung des Erntegutförderorgans benachbart angeordneten Gutmitnahmeelementen, sodass im Wesentlichen sichergestellt ist, dass das Erntegutförderorgan in seinem rückwärtigen Bereich vollständig vom Erntegutstrang getrennt wird.

Eine konstruktiv besonders einfache Ausführung der Abstreifer ergibt sich dann, wenn der Abstreifer von seitlichen Begrenzungsstegen gebildet wird und deren Abstand zueinander wenigstens teilweise von der oder den Gutleitkanten überbrückt wird.

Eine das von der Pickup-Trommel aufgenommene Erntegut auf kurzem Weg und gutstauvermeidend an die Schneid- und Fördereinrichtung übergebende Ausführung wird dann erreicht, wenn das Erntegutförderorgan das Halmgut unterschlächtig fördert und dem Erntegutförderorgan im rückwärtigen Bereich obenseitig wenigstens eine in Gutflussrichtung umlaufende Niederhaltetrommel und zumindest eine oberschlächtig fördernde Schneid- und Fördereinrichtung zugeordnet ist, wobei sich die in den Umfangskreis des Erntegutförderers eingreifende Gutleitkante eines oder mehrerer Abstreifer bis in den Wirkbereich der Niederhaltetrommel und der Schneid- und Fördereinrichtung erstreckt und zumindest in ihrem rückwärtigen Bereich eine der Rotationsbewegung der Schneid- und Fördereinrichtung angepasste Krümmung aufweist.

Je nach gewünschter Intensität der Einwirkung der Niederhaltetrommel auf die Bewegung des Erntegutstranges kann die Niederhaltetrommel aktiv oder durch die Bewegung des Erntegutstranges passiv angetrieben werden.

Um auch bei Reversierbetrieb der landwirtschaftlichen Erntemaschine eine das von der Pickup-Trommel aufgenommene Erntegut auf kurzem Weg und gutstauvermeidend an die Schneid- und Fördereinrichtung übergebende und im Reversierbetrieb den Einzug von Erntegut vermeidende Ausführung zu erhalten, ist in einer weiteren vorteilhaften Ausgestaltung der Erfindung vorgesehen, dass das Erntegutförderorgan das Halmgut unterschlächtig fördert und dem Erntegutförderorgan im rückwärtigen Bereich obenseitig wenigstens eine in ihrer Drehrichtung reversierbare Niederhaltetrommel und zumindest eine Schneid- und Fördereinrichtung zugeordnet ist, wobei dem Erntegutförderer ein oder mehrere Abstreifer mit frontseitiger Gutleitkante und rückwärtiger Gutleitkante zugeordnet sind, wobei sich die in den Umfangskreis des Erntegutförderers eingreifende rückwärtige Gutleitkante eines oder mehrerer Abstreifer bis in den Wirkbereich der Niederhaltetrommel und der Schneid- und Fördereinrichtung erstreckt und zumindest in ihrem rückwärtigen Bereich eine der Rotationsbewegung der Schneid- und Fördereinrichtung angepasste Krümmung aufweist, während die frontseitige Gutleitkante wallartig gekrümmt ist.

Eine konstruktiv besonders einfach gestaltete Ausführung ergibt sich dann, wenn das Erntegutförderorgan das Halmgut unterschlächtig fördert und dem Erntegutförderorgan im rückwärtigen Bereich zumindest eine Schneid- und Fördereinrichtung zugeordnet ist, wobei dem Erntegutförderer ein oder mehrere Abstreifer mit rückwärtiger Gutleitkante zugeordnet sind und wobei sich die in den Umfangskreis des Erntegutförderers eingreifende rückwärtige Gutleitkante eines oder mehrerer Abstreifer bis in den Wirkbereich des die Schneid- und Fördereinrichtung wenigstens teilweise umgebanden Förderkanals erstreckt und zumindest in ihrem rückwärtigen Bereich eine der Rotationsbewegung der Schneid- und Fördereinrichtung angepasste Krümmung aufweist.

Eine besonders vorteilhafte Weiterbildung einer solchen Ausführung ergibt sich dann, wenn der oder die Abstreifer zudem über eine frontseitige Gutleitkante verfügen über die im Reversierbetrieb Erntegut am Erntegutförderorgan abgestriffen wird, sodass sichergestellt ist, dass im Reversierbetrieb kein Erntegut in den Bereich der Schneid- und Fördereinrichtung gelangt.

Weitere vorteilhafte Ausgestaltungen sind Gegenstand weiterer Unteransprüche und werden nachfolgend anhand von Zeichnungen näher erläutert.

Es zeigen:
- Figur 1: schematische Seitenansicht einer erfindungsgemäßen Ballenpresse
- Figur 1a: Detaildarstellung der erfindungsgemäßen Ballenpresse nach Figur 1
- Figur 2: Detailansicht des Einzugsbereichs der Ballenpresse in einer ersten Ausführungsform
- Figur 3: Schnittdarstellung nach Schnittlinie III-III in Figur 2
- Figur 4: Detailansicht des Einzugsbereichs der Ballenpresse in einer zweiten Ausführungsform
- Figur 5: Detailansicht des Einzugsbereichs der Ballenpresse in einer dritten Ausführungsform

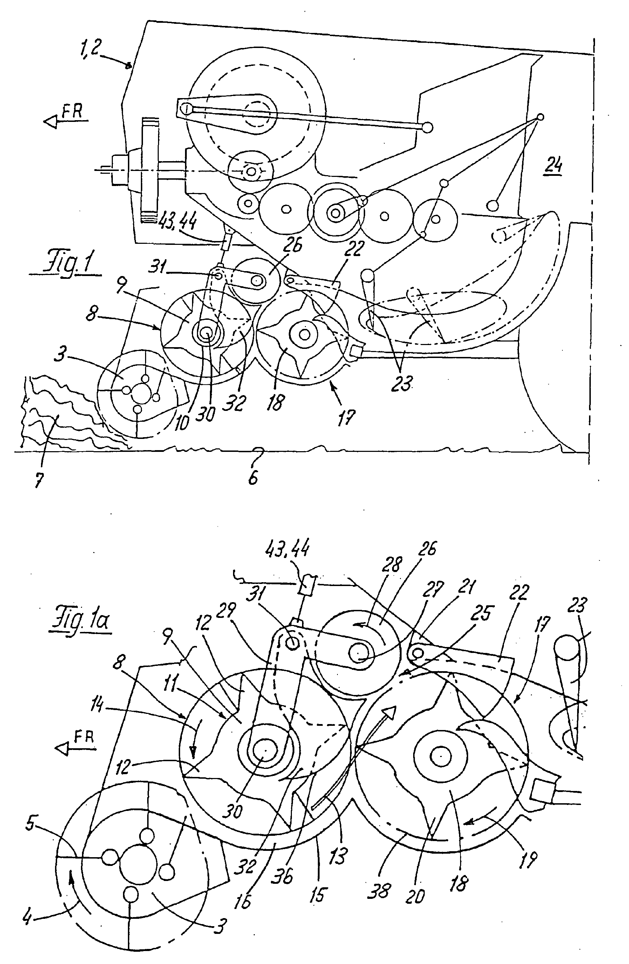

Figur 1 zeigt schematisch den vorderen Bereich einer als Ballenpresse 2 ausgeführten landwirtschaftlichen Erntemaschine 1. Frontseitig ist der Ballenpresse 2 eine Pickup-Trommel 3 zugeordnet, deren im Uhrzeigersinn 4 umlaufenden Förderzinken 5 auf dem Boden 6 liegendes Halmgut 7 aufnehmen und einem nachgeordneten Erntegutförderorgan 8 zuführen. Das Erntegutförderorgan 8 ist im beschriebenen Ausführungsbeispiel als Fördertrommel 9 ausgeführt, wobei der Trommelmantel 10 eine Vielzahl von Mitnehmerkränzen 11 mit angeformten Mitnehmern 12 drehfest aufnimmt. Die Fördertrommel 9 läuft gemäß Pfeilrichtung 14 entgegen dem Uhrzeigersinn um und fördert das von der Pickup-Trommel 3 angenommene Erntegut 7 unterschlächtig in einem von der Verkleidung 15 begrenzten Förderkanal 16 in den rückwärtigen Bereich der Fördertrommel 9. Im rückwärtigen Bereich ist der Fördertrommel 9 eine Schneid- und Fördereinrichtung 17 zugeordnet, deren Schneid- und Förderrotor 18 im Uhrzeigersinn 19 umläuft und den aus der Fördertrommel 9 austretenden Erntegutstrang 13 oberschlächtig abfördert. Dabei wird der Erntegutstrang 13 von den Mitnehmern 20 des Schneid- und Förderrotors 18 obenseitig am Rahmen 21 der Ballenpresse 2 in ihrer Lage zum Schneid- und Förderrotor 18 veränderbaren Messern 22 zugeführt und zerkleinert. Es liegt im Rahmen der Erfindung, dass der dargestellte Schneid- und Förderrotor 17 auch nur Fördern kann ohne das Erntegut gleichzeitig zu zerkleinern. Im rückwärtigen Bereich des Schneid- und Förderrotors 18 übergeben dessen Mitnehmer 20 den Erntegutstrang 13 an sogenannte Rafferzinken 23 die den Erntegutstrang 13 in an sich bekannter und deshalb nicht näher beschriebener Weise annehmen und schließlich an den Pressraum 24 der Ballenpresse 2 übergeben.

Damit die Übergabe des Erntegutstranges 13 von der Fördertrommel 9 an den Schneid- und Förderrotor 18 störungsfrei erfolgt sind der Fördertrommel 9 und dem Schneid- und Förderrotor 18 im Übergabebereich 25 obenseitig eine Niederhaltetrommel 26 zugeordnet, die um eine quer zur Fahrtrichtung FR angeordnete Drehachse 27 entgegen dem Uhrzeigersinn gemäß Pfeilrichtung 28 umläuft und dabei die Übergabe des Erntegutstranges 13 von der Fördertrommel 9 an den Schneid- und Förderrotor 18 unterstützt. Es liegt im Rahmen der Erfindung, dass die Niederhaltertrommel 26 in nicht näher dargestellter Weise aktiv angetrieben oder durch das an ihr vorbeigeführte Erntegut 13 passiv angetrieben werden kann. Im dargestellten Ausführungsbeispiele sind der Niederhaltertrommel 26 beidseitig beliebig ausgeführte Tragarme 29 zugeordnet, die in ihrem der Niederhaltertrommel 26 abgewandten Bereich die Fördertrommel 9 um eine ebenfalls quer zur Fahrtrichtung FR weisende Achse 30 drehbar aufnehmen. Den Tragarmen 29 ist eine weitere quer zur Fahrtrichtung FR weisende Schwenkachse 31 zugeordnet, die sich zumindest über die gemeinsame Breite von Fördertrommel 9 und nachgeordnetem Schneid- und Förderrotor 18 erstreckt und ein oder mehrere noch näher zu beschreibende erfindungsgemäße Abstreifer 32 aufnimmt.

Gemäß dem Ausführungsbeispiel nach Fig. 2 und 3 werden die erfindungsgemäßen Abstreifer 32 von einem ersten seitlichen Begrenzungssteg 33 und zumindest einem weiteren seitlichen Begrenzungssteg 34 gebildet, wobei die beiden Begrenzungsstege 33, 34 in ihrem rückwärtigen, in montiertem Zustand dem Schneid- und Förderrotor 18 zugewandten Bereich wenigstens teilweise über einen Quersteg 35 miteinander verbunden, im einfachsten Fall miteinander verschweißt sind. Im Bereich des Quersteges 35 weisen die seitlichen Begrenzungsstege 33, 34 eine bogenförmige Kontur auf und der Quersteg 35 ist gemäß dieser bogenförmigen Kontur verformt, sodass der Quersteg 35 die Gutleitkante 36 des jeweiligen Abstreifers 32 bildet. In erfindungsgemäßer Weise sind der oder die Abstreifer 32 der Fördertrommel 9 so in deren rückwärtigen Bereich zugeordnet, dass die Gutleitkante 36 wenigsten teilweise in den von den Außenkanten der Mitnehmerkränzen 11 beschriebenen Umfangskreis 37 der Fördertrommel 9 eingreifen und sich bis in den dem Förderrotor 9 nachgeordneten Übergabebereich 25 erstrecken. Damit die Gutleitkante 36 der erfindungsgemäßen Abstreifer 32 die Umlenkung des Erntegutstranges 13 im Übergabebereich 25 optimal unterstützt, sind die Gutleitkanten 36 in ihrem vorderen Bereich gemäß der Drehrichtung 14 der Fördertrommel 9 und in ihrem abgabeseitigen Bereich gemäß der Drehrichtung 19 des Schneid- und Förderrotors 18 gekrümmt. Die Gutleitkanten 36 erstrecken sich im Übergabebereich 25 bis in den Wirkbereich der der Fördertrommel 9 obenseitig zugeordneten Niederhaltertrommel 26, wobei die Gutleitkanten 36 der Hüllkurve 38 des Schneid- und Förderrotors 18 mit Abstand folgen. Auf diese Weise haben die Gutleitkanten 36 zugleich Gegenhaltefunktion für den Schneid- und Förderrotor 18, sodass dieser den Erntegutstrang 13 gutstauvermeidend annehmen und weiterfördern kann.

In einer weiteren Ausführungsvariante nach Fig. 4 kann den erfindungsgemäßen Abstreifern 32 frontseitig eine weitere Gutleitkante 39 zugeordnet sein, die analog der rückwärtigen Gutleitkante 36 als Quersteg 40 ausgeführt und mit den Begrenzungsstegen 33, 34 auf wenigstens einem Teil ihrer Länge verbunden ist. Verfügt nun zumindest die Fördertrommel 9 über eine an sich bekannte und deshalb nicht näher erläuterte Reversiereinrichtung, die eine Drehrichtungsumkehr gemäß der Pfeilrichtungen 41 an der Fördertrommel 9 zulässt, so kann das von den Mitnehmern 10 erfasste Erntegut bei Drehung der Fördertrommel 9 entgegen dem Uhrzeigersinn, dem Reversieren, an den frontseitigen Gutleitkanten 39 abgestriffen werden, wodurch das obenseitige Einziehen von Erntegut während des Reversiervorganges vermieden wird. Kann ferner auch der Schneid- und Förderrotor 18 gemäß Pfeilrichtung 42 reversieren, stellt die rückwärtige Gutleitkante 36 der Abstreifer 32 sicher, dass das Erntegut gemäß Pfeilrichtung 43 im Übergabebereich sicher umgelenkt und nun von den Mitnehmern 12 der Fördertrommel 9 erfasst werden kann. Die Abweisfunktion der frontseitigen Gutleitkante 39 wird dann besonders effektiv sein, wenn sie wallartig der Reversierdrehrichtung 41 der Fördertrommel 9 entgegengerichtet ist und zudem aus dem Umfangskreis 37 der Fördertrommel 8 herausführt.

Damit die Abstreif- und Gutleitfunktion der erfindungsgemäßen Abstreifer 32 auf einfache Weise an unterschiedliche Ernteguteigenschaften oder-arten anpassbar ist, können in einer weiteren Ausführungsform die Abstreifer 32 auf der sie durchsetzenden Schwenkachse 31 in verschiedene Positionen verschwenk- und feststellbar angeordnet sein. Es liegt im Rahmen der Erfindung, dass dieser Verschwenkvorgang für alle Abstreifer 32 gemeinsam oder für jeden Abstreifer 32 separat erfolgen kann, wobei zur Lageänderung die für die Positionsänderung der Schneidmesser 22 bereits bekannten, nicht näher dargestellte Schwenkmechanismen eingesetzt werden können.

Den die Fördertrommel 9 beidendig aufnehmenden Tragarmen 29 kann zudem zumindest ein als Hubzylinder 43 ausgeführtes Verstellorgan 44 zugeordnet sein, welches durch Druckbeaufschlagung oder Druckentlastung die Tragarme 29 und damit das als Förderrotor 9 ausgeführte Erntegutförderorgan 8 anheben oder absenken kann. Aufgrund dessen, dass die die erfindungsgemäßen Abstreifer 32 aufnehmende Schwenkachse 31 ebenfalls mit den Tragarmen 29 in Wirkverbindung steht, führt das Verschwenken der Fördertrommel 9 zugleich zu einem Verschwenken der erfindungsgemäßen Abstreifer 32, sodass deren Zuordnung zur Fördertrommel 9 unverändert bleibt.

Gemäß Fig. 3 sind die erfindungsgemäßen Abstreifer 32 so auf der Schwenkachse 31 angeordnet, dass jeder Abstreifer 32 zumindest teilweise den Zwischenraum zwischen benachbarten Mitnehmerkränzen 11 der Fördertrommel 9 durchsetzt, wobei die seitlichen Begrenzungsstege 33, 34 der Abstreifer 32 bis nahe an die jeweiligen Mitnehmerkränze 11 heranreichen.

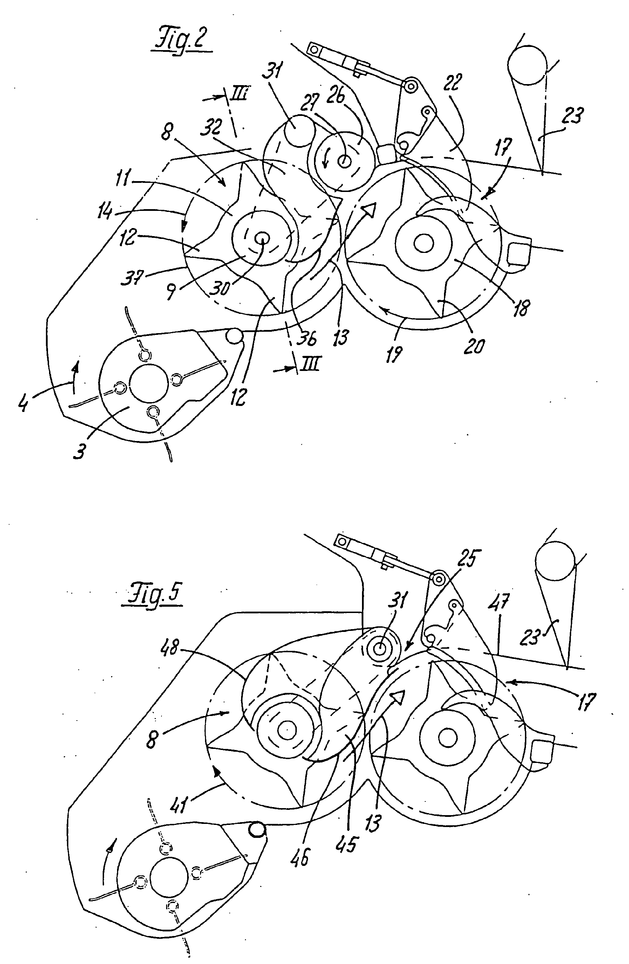

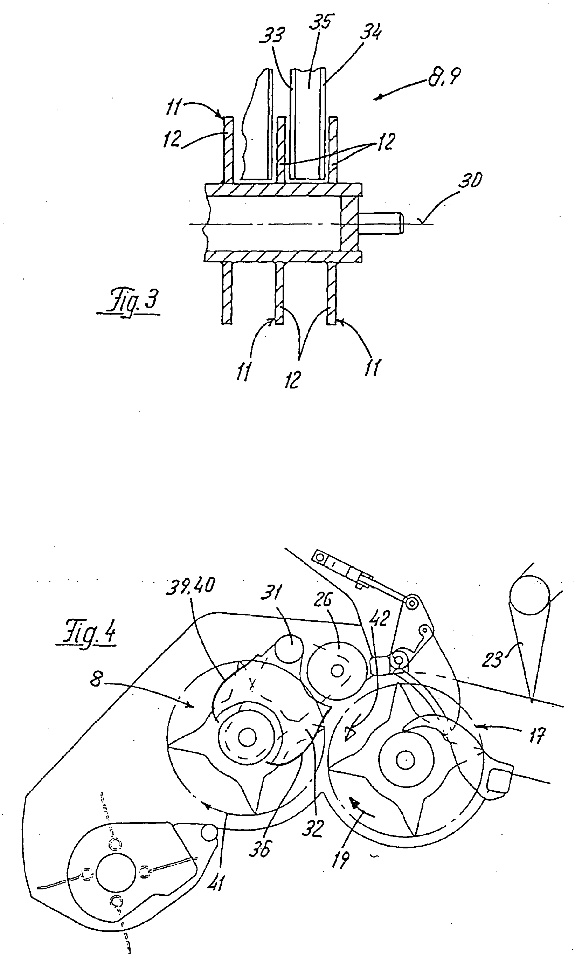

In einer Ausführungsform nach Fig. 5 sind der oder die erfindungsgemäßen Abstreifer 45 so geformt, dass ihre Gutleitkante 46 sich soweit in den Übergabebereich 25 erstreckt, dass der nachgeordnete Schneid- und Förderrotor 18 in einem Bereich ummantelt wird, der sich bis zur gestellfesten Verkleidung 47 der Ballenpresse 2 erstreckt. Bei einer solchen Ausgestaltung der Erfindung kann auf die Anordnung einer Niederhaltetrommel 26 im Übergabebereich 25 verzichtet werden. Es liegt im Rahmen der Erfindung, dass den erfindungsgemäßen Abstreifern 45 eine weitere frontseitige Gutleitkante 48 zugeordnet sein kann, die beim Betreiben der Fördertrommel 9 in Reversierdrehrichtung 41, 42 wie bereits beschrieben, ein Einziehen von Erntegut 13 verhindert.

### Bezugszeichenliste

- 1: landwirtschaftliche Erntemaschine
- 2: Ballenpresse
- 3: Pickup-Trommel
- 4: Drehrichtung
- 5: Förderzinken
- 6: Boden
- 7: Halmgut
- 8: Erntegutförderorgan
- 9: Fördertrommel
- 10: Trommelmantel
- 11: Mitnehmerkranz
- 12: Mitnehmer
- 13: Erntegutstrang
- 14: Drehrichtung
- 15: Verkleidung
- 16: Förderkanal
- 17: Schneid- und Fördereinrichtung
- 18: Förderrotor
- 19: Drehrichtung
- 20: Mitnehmer
- 21: Rahmen
- 22: Messer
- 23: Rafferzinken
- 24: Pressraum
- 25: Übergabebereich .
- 26: Niederhaltetrommel
- 27: Drehachse
- 28: Drehrichtung
- 29: Tragarm
- 30: Drehachse
- 31: Schwenkachse
- 32: Abstreifer
- 33: Begrenzungssteg
- 34: Begrenzungssteg
- 35: Quersteg
- 36: Gutleitkante
- 37: Umfangskreis
- 38: Hüllkurve
- 39: Gutleitkante
- 40: Quersteg
- 41: Reversierdrehrichtung
- 42: Reversierdrehrichtung
- 43: Hubzylinder
- 44: Verstellorgan
- 45: Abstreifer
- 46: Gutleitkante
- 47: Verkleidung
- 48: Gutleitkante

## Patentansprüche

1. Ballenpresse für landwirtschaftliches Erntegut mit einem Erntegutaufnehmer, wobei der Erntegutaufnehmer in Gutförderrichtung zumindest eine das landwirtschaftliche Halmgut frontseitig aufnehmende Pickup-Trommel und wenigstens ein der Pickup-Trommel nachgeordnetes um eine quer zur Fahrtrichtung angeordneten Achse umlaufendes am Umfang Mitnahmeelemente aufweisendes Erntegutförderorgan aufnimmt, wobei dem Erntegutförderorgan zumindest eine Schneid- und/oder Fördereinrichtung nachgeordnet ist und
dem Erntegutförderorgan (8, 9) ein oder mehrere Abstreifer (32, 45) zugeordnet sind, **dadurch gekennzeichnet, dass** der oder die Abstreifer (32, 45) zumindest eine Gutleitkante (36, 39, 46, 48) aufweisen, die wenigstens teilweise in den Umfangskreis (37) des Erntegutförderorgans (8, 9) eingreift und sich in den dem Erntegutförderorgan (8, 9) nachgeordneten Bereich (25) der Schneid- und/oder Fördereinrichtung (17) erstreckt.

2. Ballenpresse für landwirtschaftliches Erntegut nach Anspruch 1,
**dadurch gekennzeichnet,**
**dass** wenigstens eine Gutleitkante (36, 39, 46, 48) eine an die Rotationsbewegung (14, 41) des Erntegutförderorgans (8, 9) und/oder an die Rotationsbewegung (19, 42) der nachgeordneten Schneid- und/oder Fördereinrichtung (17) angepasste Kurvenform aufweist.

3. Ballenpresse für landwirtschaftliches Erntegut nach einem oder mehreren der vorhergehenden Ansprüche,
**dadurch gekennzeichnet,**
**dass** die Gutleitkante (36, 46) eines oder mehrerer Abstreifer (32, 45) die Schneid- und/oder Fördereinrichtung (17) mit Abstand und zumindest über einen Teil ihres Umfangs umgreift.

4. Ballenpresse für landwirtschaftliches Erntegut nach einem oder mehreren der vorhergehenden Ansprüche,
**dadurch gekennzeichnet,**
**dass** dem oder den wenigstens teilweise in den Umfangskreis (37) des Erntegutförderorgans (8, 9) eingreifenden Abstreifern (32, 45) frontseitig zumindest eine weitere Gutleitkante (39, 48) zugeordnet ist.

5. Ballenpresse für landwirtschaftliches Erntegut nach Anspruch 4,
**dadurch gekennzeichnet,**
**dass** die frontseitige Gutleitkante (39, 48) wallartig gekrümmt ist.

6. Ballenpresse für landwirtschaftliches Erntegut nach einem oder mehreren der vorhergehenden Ansprüche,
**dadurch gekennzeichnet,**
**dass** die Position des oder der Abstreifer (32, 45) zu dem Erntegutförderorgan (8, 9) in einer festen oder veränderbaren Zuordnung erfolgt.

7. Ballenpresse für landwirtschaftliches Erntegut nach einem oder mehreren der vorhergehenden Ansprüche,
**dadurch gekennzeichnet,**
**dass** die Lage des Erntegutförderorgans (8, 9) in vertikaler Richtung veränderbar ist und der oder die Abstreifer (32, 45) mit dem Erntegutförderorgan (8, 9) mitbewegt werden.

8. Ballenpresse für landwirtschaftliches Erntegut nach einem oder mehreren der vorhergehenden Ansprüche,
**dadurch gekennzeichnet,**
**dass** die Mitnahmeelemente (11, 12) des Erntegutförderorgans (8, 9) in Achsrichtung (30) des Erntegutförderorgans (8, 9) mit Abstand zueinander angeordnet sind und die ein oder mehreren Abstreifer (32, 45) wenigstens teilweise den durch den Abstand bestimmten Bereich zwischen benachbarten Mitnahmeelementen (11, 12) durchsetzen.

9. Ballenpresse für landwirtschaftliches Erntegut nach einem oder mehreren der vorhergehenden Ansprüche,
**dadurch gekennzeichnet,**
**dass** der oder die Abstreifer (32, 45) von einem ersten Begrenzungssteg (33) und wenigstens einem weiteren diesem mit Abstand zugeordneten Begrenzungssteg (34) gebildet werden, wobei der Abstand zwischen den Begrenzungsstegen (33, 34) wenigstens teilweise von einem die fronseitige Gutleitkante (39, 48) und/oder die rückwärtige Gutleitkante (36) bildenden Quersteg (35) überbrückt wird.

10. Ballenpresse für landwirtschaftliches Erntegut nach einem oder mehreren der vorhergehenden Ansprüche,
**dadurch gekennzeichnet,**
**dass** das Erntegutförderorgan (8, 9) das Halmgut (7) unterschlächtig fördert und dem Erntegutförderorgan (8, 9) im rückwärtigen Bereich (25) obenseitig wenigstens eine in Gutflussrichtung (13) umlaufende Niederhaltetrommel (26) und zumindest eine oberschlächtig fördernde Schneid- und/oder Fördereinrichtung (17) zugeordnet ist, wobei sich die in den Umfangskreis (37) des Erntegutfördererorgans (8, 9) eingreifende Gutleitkante (36) eines oder mehrerer Abstreifer (32) bis in den Wirkbereich der Niederhaltetrommel (36) und der Schneid- und/oder Fördereinrichtung (17) erstreckt und zumindest in ihrem rückwärtigen Bereich eine der Rotationsbewegung (19, 42) der Schneid- und/oder Fördereinrichtung (17) angepasste Krümmung aufweist.

11. Ballenpresse für landwirtschaftliches Erntegut nach Anspruch 9,
**dadurch gekennzeichnet,**
**dass** die Niederhaltetrommel (26) aktiv oder passiv angetrieben ist.

12. Ballenpresse für landwirtschaftliches Erntegut nach einem oder mehreren der vorhergehenden Ansprüche,
**dadurch gekennzeichnet,**
**dass** das Erntegutförderorgan (8, 9) das Halmgut (7) unterschlächtig fördert und dem Erntegutförderorgan (8, 9) im rückwärtigen Bereich (25) obenseitig wenigstens eine in ihrer Drehrichtung (28) reversierbare Niederhaltetrommel (26) und zumindest eine Schneid- und/oder Fördereinrichtung (17) zugeordnet ist, wobei dem Erntegutförderorgan (8, 9) ein oder mehrere Abstreifer (32) mit frontseitiger Gutleitkante (39) und rückwärtiger Gutleitkante (36) zugeordnet sind, wobei sich die in den Umfangskreis (37) des Erntegutförderorgans (8, 9) eingreifende rückwärtige Gutleitkante (36) eines oder mehrerer Abstreifer (32) bis in den Wirkbereich (25) der Niederhaltetrommel (26) und der Schneid- und/oder Fördereinrichtung (17) erstreckt und zumindest in ihrem rückwärtigen Bereich eine der Rotationsbewegung (19, 42) der Schneid- und/oder Fördereinrichtung (17) angepasste Krümmung aufweist, während die frontseitige Gutleitkante (39) wallartig gekrümmt ist.

13. Ballenpresse für landwirtschaftliches Erntegut nach einem oder mehreren der vorhergehenden Ansprüche,
**dadurch gekennzeichnet,**
**dass** das Erntegutförderorgan (8, 9) das Halmgut (7) unterschlächtig fördert und dem Erntegutförderorgan (8, 9) im rückwärtigen Bereich (25) zumindest eine Schneid- und/oder Fördereinrichtung (17) zugeordnet ist, wobei dem Erntegutförderorgan (8, 9) ein oder mehrere Abstreifer (45) mit rückwärtiger Gutleitkante (46) zugeordnet sind, wobei sich die in den Umfangskreis (37) des Erntegutförderorgans (8, 9) eingreifende rückwärtige Gutleitkante (46) eines oder mehrerer Abstreifer (45) bis in den Wirkbereich (25) des die Schneid- und/oder Fördereinrichtung (17) wenigstens teilweise umgebenden Förderkanals (47) erstreckt und zumindest in ihrem rückwärtigen Bereich eine der Rotationsbewegung (19, 42) der Schneid- und/oder Fördereinrichtung (17) angepasste Krümmung aufweist.

14. Ballenpresse für landwirtschaftliches Erntegut nach Anspruch 13,
**dadurch gekennzeichnet,**
**dass** dem oder den Abstreifern (45) zumindest eine frontseitige wallartig gekrümmte Gutleitkante (48) zugeordnet ist.

## Claims

1. A bale press for agricultural crop material comprising a crop material pick-up device wherein in the direction of material conveying the crop material pick-up device has at least one pick-up drum for picking up the agricultural stalk material at the front side and at least one crop material conveying member which is arranged downstream of the pick-up drum and which has entrainment elements at the periphery which rotate about an axis arranged transversely with respect to the direction of travel, wherein at least one cutting and/or conveying device is arranged downstream of the crop material conveying member, and one or more strippers (32, 45) are associated with the crop material conveying member (8, 9), **characterised in that** the stripper or strippers (32, 45) have at least one material guide edge (36, 39, 46, 48) which engages at least partially into the peripheral circle (37) of the crop material conveying member (8, 9) and extends into the region (25) of the cutting and/or conveying device (17), which region (25) is arranged downstream of the crop material conveying member (8, 9).

2. A bale press for agricultural crop material according to claim 1 **characterised in that** at least one material guide edge (36, 39, 46, 48) has a curve shape which is adapted to the rotary movement (14, 41) of the crop material conveying member (8, 9) and/or to the rotary movement (19, 42) of the subsequently arranged cutting and/or conveying device (17).

3. A bale press for agricultural crop material according to one or more of the preceding claims **characterised in that** the material guide edge (36, 46) of one or more strippers (32, 45) embraces the cutting and/or conveying device (17) at a spacing and at least over a part of its periphery.

4. A bale press for agricultural crop material according to one or more of the preceding claims **characterised in that** at least one further material guide edge (39, 48) is associated at the front side with the stripper or strippers (32, 45) which at least partially engage into the peripheral circle (37) of the crop material conveying member (8,9).

5. A bale press for agricultural crop material according to claim 4 **characterised in that** the front-side material guide edge (39, 48) is curved in a rampart-like configuration.

6. A bale press for agricultural crop material according to one or more of the preceding claims **characterised in that** the position of the stripper or strippers (32, 45) relative to the crop material conveying member (8, 9) is effected in a fixed or variable association.

7. A bale press for agricultural crop material according to one or more of the preceding claims **characterised in that** the position of the crop material conveying member (8, 9) is variable in the vertical direction and the stripper or strippers (32, 45) are moved with the crop material conveying member (8, 9).

8. A bale press for agricultural crop material according to one or more of the preceding claims **characterised in that** the entrainment elements (11, 12) of the crop material conveying member (8, 9) are arranged at a spacing relative to each other in the axial direction (30) of the crop material conveying member (8, 9) and the one or more strippers (32, 35) at least partially pass through the region, defined by the spacing, between adjacent entrainment elements (11,12).

9. A bale press for agricultural crop material according to one or more of the preceding claims **characterised in that** the stripper or strippers (32, 45) are formed by a first defining leg (33) and at least one further defining leg (34) associated therewith at a spacing, wherein the spacing between the defining legs (33, 34) is at least partially bridged over by a transverse leg (35) forming the front-side material guide edge (39, 48) and/or the rearward material guide edge (36).

10. A bale press for agricultural crop material according to one or more of the preceding claims **characterised in that** the crop material conveying member (8, 9) conveys the stalk material (7) in undershot relationship and associated with the crop material conveying member (8, 9) in the rearward region (25) at the upper side is at least one hold-down drum (26) rotating in the material flow direction (13) and at least one cutting and/or conveying device (17) conveying in overshot relationship, wherein the material guide edge (36) of one or more strippers (32), which engages into the peripheral circuit (37) of the crop material conveying member (8, 9), extends into the operative region of the hold-down drum (36) and the cutting and/or conveying device (17) and at least in its rearward region is of a curvature adapted to the rotary movement (19, 42) of the cutting and/or conveying device (17).

11. A bale press for agricultural crop material according to claim 9 **characterised in that** the hold-down drum (26) is actively or passively driven.

12. A bale press for agricultural crop material according to one or more of the preceding claims **characterised in that** the crop material conveying member (8, 9) conveys the stalk material (7) in undershot relationship and at least one hold-down drum (26) which is reversible in its direction of rotation (28) and at least one cutting and/or conveying device (17) is associated with the crop material conveying member (8, 9) in the rearward region (25) at the upper side, wherein associated with the crop material conveying member (8, 9) are one or more strippers (32) with a front-side material guide edge (39) and a rearward material guide edge (36), wherein the rearward material guide edge (36) of one or more strippers (32), which engages into the peripheral circle (37) of the crop material conveying member (8, 9), extends into the operative region (25) of the hold-down drum (26) and the cutting and/or conveying device (17) and at least in its rearward region is of a curvature which is adapted to the rotary movement (19, 42) of the cutting and/or conveying device (17) while the front-side material guide edge (39) is curved in a rampart-like configuration.

13. A bale press for agricultural crop material according to one or more of the preceding claims **characterised in that** the crop material conveying member (8, 9) conveys the stalk material (7) in undershot relationship and at least one cutting and/or conveying device (17) is associated with the crop material conveying member (8, 9) in the rearward region (25), wherein associated with the crop material conveying member (8, 9) are one or more strippers (45) with a rearward material guide edge (46), wherein the rearward material guide edge (46) of one or more strippers (45), which engages into the peripheral circle (37) of the crop material conveying member (8, 9), extends into the operative region (25) of the conveying passage (47) which at least partially surrounds the cutting and/or conveying device (17) and at least in its rearward region is of a curvature which is adapted to the rotary movement (19, 42) of the cutting and/or conveying device (17).

14. A bale press for agricultural crop material according to claim 13 **characterised in that** at least one front-side material guide edge (48) which is curved in a rampart-like configuration is associated with the stripper or strippers (45).

## Revendications

1. Presse-botteleuse pour du produit agricole récolté, avec un ramasseur de produit récolté, le ramasseur de produit récolté comprenant, dans le sens d'amenée du produit, au moins un tambour ramasseur recueillant frontalement le produit agricole en tiges et au moins un organe d'amenée de produit récolté qui est disposé en aval du tambour ramasseur, qui tourne autour d'un axe disposé transversalement à la direction de déplacement et qui comporte à sa périphérie des éléments d'entraînement, au moins un dispositif de coupe et/ou d'amenée étant disposé en aval de l'organe d'amenée de produit récolté, et à l'organe d'amenée de produit récolté (8, 9) étant associés un ou plusieurs racleurs (32, 45), **caractérisée en ce que** le ou les racleurs (32, 45) comportent au moins un bord de guidage de produit (36, 39, 46, 48) qui pénètre au moins partiellement dans la circonférence (37) de l'organe d'amenée de produit récolté (8, 9) et qui s'étend dans la zone (25) du dispositif de coupe et/ou d'amenée (17) située en aval de l'organe d'amenée de produit récolté (8, 9).

2. Presse-botteleuse pour du produit agricole récolté selon la revendication 1, **caractérisée en ce qu'**au moins un bord de guidage de produit (36, 39, 46, 48) présente une forme courbe adaptée au mouvement de rotation (14, 41) de l'organe d'amenée dé produit récolté (8, 9) et/ou au mouvement de rotation (19, 42) du dispositif de coupe et/ou d'amenée aval (17).

3. Presse-botteleuse pour du produit agricole récolté selon une ou plusieurs des revendications précédentes, **caractérisée en ce que** le bord de guidage de produit (36, 46) d'un ou plusieurs racleurs (32, 45) entoure le dispositif de coupe et/ou d'amenée (17) à distance et au moins sur une partie de sa périphérie.

4. Presse-botteleuse pour du produit agricole récolté selon une ou plusieurs des revendications précédentes, **caractérisée en ce qu'**au moins un autre bord de guidage de produit (39, 48) est associé frontalement au ou aux racleurs (32, 45) pénétrant au moins partiellement dans la circonférence (37) de l'organe d'amenée de produit récolté (8, 9).

5. Presse-botteleuse pour du produit agricole récolté selon la revendication 4, **caractérisée en ce que** le bord frontal de guidage de produit (39, 48) est courbé en talus.

6. Presse-botteleuse pour du produit agricole récolté selon une ou plusieurs des revendications précédentes, **caractérisée en ce que** la position du ou des racleurs (32, 45) par rapport à l'organe d'amenée de produit récolté (8, 9) est fixe ou variable.

7. Pressé-botteleuse pour du produit agricole récolté selon une ou plusieurs des revendications précédentes, **caractérisée en ce que** la position de l'organe d'amenée de produit récolté (8, 9) est variable dans la direction verticale, et le ou les racleurs (32, 45) sont déplacés avec l'organe d'amenée de produit récolté (8, 9).

8. Presse-botteleuse pour du produit agricole récolté selon une ou plusieurs des revendications précédentes, **caractérisée en ce que** les éléments d'entraînement (11,12) de l'organe d'amenée de produit récolté (8, 9) sont disposés à distance les uns des autres dans la direction axiale (30) de l'organe d'amenée de produit récolté (8, 9), et le ou les racleurs (32, 45) traversent au moins partiellement la zone délimitée entre des éléments d'entraînement voisins (11, 12) par leur espacement.

9. Presse-botteleuse pour du produit agricole récolté selon une ou plusieurs des revendications précédentes, **caractérisée en ce que** le ou les racleurs (32, 45) sont formés par une première nervure de rive (33) et par au moins une autre nervure de rive (34) associée à distance à celle-ci, la distance entre les nervures de rive (33, 34) étant comblée au moins partiellement par une nervure transversale (35) formant le bord frontal de guidage de produit (39, 48) et/ou le bord arrière de guidage de produit (36).

10. Presse-botteleuse pour du produit agricole récolté selon une ou plusieurs des revendications précédentes, **caractérisée en ce que** l'organe d'amenée de produit récolté (8, 9) amène le produit en tiges (7) par le dessous, et à l'organe d'amenée de produit récolté (8, 9) sont associés dans la zone arrière (25), en partie haute, au moins un tambour presseur (26) tournant dans le sens d'écoulement du produit (13) et au moins un dispositif de coupe et/ou d'amenée (17) à amenée par le dessus, le bord de guidage de produit (36) d'un ou plusieurs racleurs (32), lequel pénètre dans la circonférence (37) de l'organe d'amenée de produit récolté (8, 9), s'étendant jusque dans la zone d'action du tambour presseur (36) et du dispositif de coupe et/ou d'amenée (17) et présentant, dans sa zone arrière, une courbure adaptée au mouvement de rotation (19, 42) du dispositif de coupe et/ou d'amenée (17).

11. Presse-botteleuse pour du produit agricole récolté selon la revendication 9, **caractérisée en ce que** le tambour presseur (26) est entraîné de manière active ou passive.

12. Presse-botteleuse pour du produit agricole récolté selon une ou plusieurs des revendications précédentes, **caractérisée en ce que** l'organe d'amenée de produit récolté (8, 9) amène le produit en tiges (7) par le dessous, et à l'organe d'amenée de produit récolté (8, 9) sont associés dans la zone arrière (25), en partie haute, au moins un tambour presseur (26) à sens de rotation (28) réversible et au moins un dispositif de coupe et/ou d'amenéé (17), à l'organe d'amenée de produit récolté (8, 9) étant associés un ou plusieurs racleurs (32) avec bord frontal de guidage de produit (39) et bord arrière de guidage de produit (36), le bord arrière de guidage de produit (36) d'un ou plusieurs racleurs (32), lequel traverse la circonférence (37) de l'organe d'amenée de produit récolté (8, 9), s'étendant jusque dans la zone d'action (25) du tambour presseur (26) et du dispositif de coupe et/ou d'amenée (17) et présentant, au moins dans sa zone arrière, une courbure adaptée au mouvement de rotation (19, 42) du dispositif de coupe et/ou d'amenée (17), tandis que le bord frontal de guidage de produit (39) est courbé en talus.

13. Presse-botteleuse pour du produit agricole récolté selon une ou plusieurs des revendications précédentes, **caractérisée en ce que** l'organe d'amenée de produit récolté (8, 9) amène le produit en tiges (7) par le dessous, et à l'organe d'amenée de produit récolté (8, 9) est associé dans la zone arrière (25) au moins un dispositif de coupe et/ou d'amenée (17), à l'organe d'amenée de produit récolté (8, 9) étant associés un ou plusieurs racleurs (45) à bord arrière de guidage de produit (46), le bord arrière de guidage de produit (46) d'un ou plusieurs racleurs (45), lequel pénètre dans la circonférence (37) de l'organe d'amenée de produit récolté (8, 9), s'étendant jusque dans la zone d'action (25) du canal d'amenée (47) qui entoure au moins partiellement le dispositif de coupe et/ou d'amenée (17) et présentant, au moins dans sa zone arrière, une courbure adaptée au mouvement de rotation (19, 42) du dispositif de coupe et/ou d'amenée (17).

14. Presse-botteleuse pour du produit agricole récolté selon la revendication 13, **caractérisée en ce qu'**au ou aux racleurs (45) est associé au moins un bord frontal de guidage de produit (48) courbé en talus.
